# EUROPEAN PATENT APPLICATION

(11) **EP 3 444 808 A1**
(43) Date of publication of application: **20.02.2019**
(21) Application number: 17782153.5
(22) Date of filing: 06.03.2017
(51) Int. Cl.: G10L 15/22

(54) **INFORMATION PROCESSING DEVICE, INFORMATION PROCESSING METHOD, AND PROGRAM**

(30) Priority: 11.04.2016 JP 2016079005
(71) Applicant: Sony Corporation, Tokyo 108-0075 (JP)
(72) Inventor: KOGA, Yasuyuki, Tokyo 108-0075 (JP)
(74) Representative: MFG Patentanwälte Meyer-Wildhagen Meggle-Freund Gerhard PartG mbB
(86) International application number: PCT/JP2017/008644
(87) International publication number: WO 2017/179335

(57) **Abstract**

[Object] To provide a system capable of achieving both improvement in recognition performance and shortening of processing time with regard to speech recognition processes.

[Solution] Provided is an information processing device, an information processing method, and a program, the information processing device including: an acquisition unit configured to acquire voice information acquired through voice input; and a control unit configured to control change in at least a part of correspondence relations between the voice information and processes based on the voice information in a set of the correspondence relations to be used in a speech recognition process, on a basis of object information of operation using the voice input or subject information of the operation.

## Description

### Technical Field

The present disclosure relates to an information processing device, an information processing method, and a program.

### Background Art

In recent years, input technologies for smoothing interaction between users and devices have been studied and developed. Examples of such input technologies include voice input technologies. In general, in the voice input technologies, a speech recognition process for recognizing voice is performed by analyzing voice information generated from voice spoken by a user.

In general, in the speech recognition process, voice is recognized by analyzing voice information, generating text information, and determining whether the generated text information is identical or similar to text information included in dictionary information. Therefore, performance of the speech recognition varies in accordance with amounts of the text information included in the dictionary information. For example, in general, as the amounts of the text information get larger, a possibility of recognizing voice increases, and a possibility of false recognition also increases. In addition, in general, as the amounts of the text information get smaller, the possibility of recognizing voice decreases, and the possibility of false recognition also decreases.

With regard to this problem, Patent Literature 1 discloses an invention related to an information processing device configured to perform a process of estimating a position of a user on the basis of input image information and input voice information, performs a process of identifying the user, and performs a speech recognition process by using any of a small vocabulary dictionary and a large vocabulary dictionary selected on the basis of a result of the processes. As a result, it is considered possible to suppress errors in the speech recognition and improve accuracy thereof.

### Citation List

### Patent Literature

Patent Literature 1: JP 2013-257418A

### Disclosure of Invention

### Technical Problem

However, according to the invention disclosed in Patent Literature 1, there is a tradeoff between improvement in the recognition performance and shortening of processing time. For example, in the case where the small vocabulary dictionary is selected as dictionary information, there is a higher possibility that the dictionary information does not include text information corresponding to voice spoken by a user, in comparison with the case where the large vocabulary dictionary is selected as the dictionary information. In other words, the speech recognition is likely to fail, and a recognition rate can decrease. On the other hand, in the case where the large vocabulary dictionary is selected as dictionary information, there is a higher possibility that the dictionary information includes text information corresponding to voice spoken by a user, in comparison with the case where the small vocabulary dictionary is selected as the dictionary information. However, longer processing time is necessary since the large vocabulary dictionary includes a large number of pieces of text information. In other words, it takes time to obtain a result of speech recognition, and responses to the user can deteriorate. In addition, as described above, increase in the text information simply leads the possibility of false recognition.

Accordingly, the present disclosure proposes a system capable of achieving both improvement in recognition performance and shortening of processing time with regard to speech recognition processes.

### Solution to Problem

According to the present disclosure, there is provided an information processing device including: an acquisition unit configured to acquire voice information acquired through voice input; and a control unit configured to control change in at least a part of correspondence relations between the voice information and processes based on the voice information in a set of the correspondence relations to be used in a speech recognition process, on a basis of object information of operation using the voice input or subject information of the operation.

In addition, according to the present disclosure, there is provided an information processing method including, by using a processor: acquiring voice information acquired through voice input; and controlling change in at least a part of correspondence relations between the voice information and processes based on the voice information in a set of the correspondence relations to be used in a speech recognition process, on a basis of object information of operation using the voice input or subject information of the operation.

In addition, according to the present disclosure, there is provided a program causing a computer to achieve: an acquisition function of acquiring voice information acquired through voice input; and a control function of controlling change in at least a part of correspondence relations between the voice information and processes based on the voice information in a set of the correspondence relations to be used in a speech recognition process, on a basis of object information of operation using the voice input or subject information of the operation.

### Advantageous Effects of Invention

As described above, according to the present disclosure, it is possible to provide the system capable of achieving both improvement in recognition performance and shortening of processing time with regard to speech recognition processes. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a block diagram schematically illustrating an example of a functional configuration of an information processing system according to a first embodiment of the present disclosure.
[FIG. 2] FIG. 2 is a diagram illustrating replacement of correspondence relations with regard to an information processing device according to the embodiment.
[FIG. 3] FIG. 3 is a diagram illustrating change in a usage dictionary in the information processing device according to the embodiment.
[FIG. 4] FIG. 4 is a flowchart conceptually illustrating an example of an entire process of the information processing system according to the embodiment.
[FIG. 5] FIG. 5 is a flowchart conceptually illustrating an example of a dictionary changing process in the information processing system according to the embodiment.
[FIG. 6] FIG. 6 is a flowchart conceptually illustrating an example of an entire process of an information processing system according to a modification of the embodiment.
[FIG. 7] FIG. 7 is a flowchart conceptually illustrating an example of a dictionary changing process in the information processing system according to the modification of the embodiment.
[FIG. 8] FIG. 8 is a block diagram schematically illustrating an example of a functional configuration of an information processing system according to a second embodiment of the present disclosure.
[FIG. 9] FIG. 9 is a flowchart conceptually illustrating an example of an entire process of the information processing system according to the embodiment.
[FIG. 10] FIG. 10 is a flowchart conceptually illustrating an example of a dictionary changing process in the information processing system according to the embodiment.
[FIG. 11] FIG. 11 is a flowchart conceptually illustrating an example of an entire process of an information processing system according to a modification of the embodiment.
[FIG. 12] FIG. 12 is a flowchart conceptually illustrating an example of a dictionary changing process in the information processing system according to the modification of the embodiment.
[FIG. 13] FIG. 13 is an explanatory diagram illustrating a hardware configuration of an information processing device according to an embodiment of the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

In addition, for convenience of description, information processing devices 100 according to first and second embodiments are distinguished by suffixing reference numerals corresponding to respective embodiments, such as an information processing device 100-1 and an information processing device 100-2.

Note that, the description is given in the following order.
1. First embodiment (change in speech recognition dictionary on basis of object information of voice input operation)
   1-1. Configuration of system
   1-2. Process performed by system
   1-3. Summary of first embodiment
   1-4. Modification
2. Second embodiment (change in speech recognition dictionary on basis of subject information of voice input operation)
   2-1. Configuration of system
   2-2. Process performed by system
   2-3. Summary of second embodiment
   2-4. Modification
3. Hardware configuration of information processing device according to embodiment of present disclosure
4. Conclusion

### <1. First embodiment (change in speech recognition dictionary on basis of object information of voice input operation)>

First, a first embodiment of the present disclosure will be described. An information processing system according to the first embodiment controls change in a speech recognition dictionary on the basis of object information of voice input operation.

### <1-1. Configuration of system>

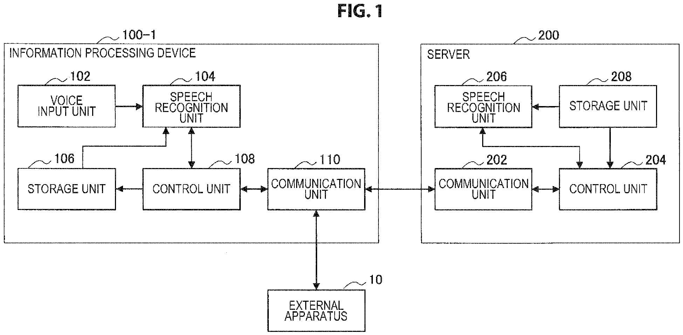

With reference to FIG. 1, a functional configuration of an information processing system according to the embodiment will be described. FIG. 1 is a block diagram schematically illustrating an example of a functional configuration of an information processing system according to the first embodiment of the present disclosure.

As illustrated in FIG. 1, the information processing system according to the embodiment includes an information processing device 100-1 and a server 200.

### (Information processing device)

The information processing device 100-1 includes a voice input unit 102, a speech recognition unit 104, a storage unit 106, a control unit 108, and a communication unit 110.

### (Voice input unit)

The voice input unit 102 serves as the acquisition unit and acquires voice information. Specifically, when a user around the information processing device 100-1 speaks, the voice input unit 102 generates voice signal information related to a signal acquired regarding the spoken voice. Note that, instead of generating the voice signal information, the voice input unit 102 may acquire voice signal information generated by an external voice input device through communication.

### (Speech recognition unit)

The speech recognition unit 104 performs a speech recognition process on the basis of voice information. Specifically, the speech recognition unit 104 decides a process (hereinafter, also referred to as a subsequent process) on the basis of correspondence relations between voice information and subsequent processes based on the voice information, and voice information provided by the voice input unit 102. For example, the speech recognition unit 104 generates text information from voice signal information when the voice input unit 102 provides the voice signal information. Subsequently, the speech recognition unit 104 determines whether there is text information that is identical or similar to (hereinafter, also referred to as "matches") the generated text information in a set (hereinafter, also referred to as a "dictionary") of the correspondence relations between text information and subsequent processes. When it is determined that there is text information that matches the generated text information, the speech recognition unit 104 notifies the control unit 108 of a subsequent process corresponding to the matched text information.

Note that, the dictionary is stored in the storage unit 106, and the dictionary (hereinafter, also referred to as a "usage dictionary") to be used for the speech recognition process is fixed or designated by the control unit 108. In addition, the example in which the dictionary is the set of correspondence relations between text information and subsequent processes has been described above. However, the dictionary may be a set of correspondence relations between voice signal information and subsequent processes.

### (Storage unit)

The storage unit 106 stores information used for the speech recognition process. Specifically, the storage unit 106 stores the dictionary. For example, the storage unit 106 stores a plurality of dictionaries, and provides the dictionary to the speech recognition unit 104. Note that, the storage unit 106 may store individual correspondence relations that are independent from units of dictionaries.

### (Control unit)

The control unit 108 controls entire operation of the information processing device 100-1. Specifically, the control unit 108 controls the speech recognition process. More specifically, the control unit 108 controls a dictionary to be used in the speech recognition process.

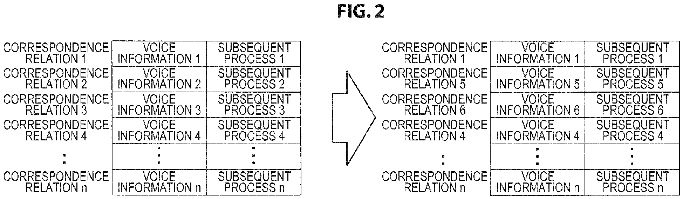

As usage dictionary control, the control unit 108 controls contents of the usage dictionary. Specifically, the control unit 108 controls change in at least a part of the usage dictionary on the basis of object information of operation using voice input. For example, the control unit 108 replaces correspondence relations in the usage dictionary. The correspondence relations are decided on the basis of usage information regarding the corresponding relations in a speech recognition process regarding the voice input operation estimated from object information of the voice input operation. In addition, with reference to FIG. 2, details of the replacement of correspondence relations will be described. FIG. 2 is a diagram illustrating replacement of correspondence relations with regard to the information processing device 100-1 according to the embodiment.

The control unit 108 decides a correspondence relation between replacement targets on the basis of frequency of usage in the speech recognition process estimated from object information of voice input operation. Specifically, the control unit 108 decides a correspondence relation to be extracted on the basis of the frequency of usage, from correspondence relations included in the usage dictionary. In addition, the control unit 108 decides a correspondence relation to be added to the usage dictionary on the basis of the frequency of usage. More specifically, the control unit 108 decides a correspondence relation estimated to have a relatively low frequency of usage in the usage dictionary on the basis of object information of voice input operation, among the correspondence relations included in the usage dictionary. In addition, the control unit 108 decides a correspondence relation estimated to have a higher frequency of usage than the correspondence relation to be extracted, among correspondence relations stored in the storage unit 106 on the basis of object information of voice input operation. For example, as extraction targets, the control unit 108 decides a correspondence relation 2 and a correspondence relation 3 in a usage dictionary illustrated in FIG. 2. In addition, the control unit 108 decides a correspondence relation 5 and a correspondence relation 6 illustrated in FIG. 2 as addition targets. Note that, the correspondence relations serving as the addition targets may be stored in an external device. In this case, the correspondence relations serving as the addition targets are acquired through communication.

Next, the control unit 108 replaces the decided correspondence relations. For example, as illustrated in FIG. 2, the control unit 108 replaces the correspondence relation 2 and the correspondence relation 3 that are decided as the extraction targets, with the correspondence relation 5 and the correspondence relation 6 that are decided as the addition targets, in the usage dictionary. Note that, the number of correspondence relations serving as the extraction targets does not have to be identical to the number of correspondence relations serving as the addition targets.

Here, the object information of voice input operation is information estimated on the basis of information acquired regarding an object of the voice input operation. Examples of the object information of the voice input operation include information for specifying an operation target. Examples of the operation target include a running application. For example, the control unit 108 acquires information for specifying the running application, and adds, to the usage dictionary, a correspondence relation related to words (hereinafter, also referred to as operation words) regarding operation of the application, the operation words having a relatively high frequency of usage in the operation of the application specified by the acquired information. Specifically, in the case of an application for delivering news, a correspondence relation related to words such as "bookmark" or "tell me in detail" is added to a usage dictionary. In the case of a music reproduction application, a correspondence relation related to words such as "pause" or "next track" is added to a usage dictionary. In the case of a voice call application, a correspondence relation related to words such as "receive a call" or "reject" is added to a usage dictionary. In the case of a photographing application, a correspondence relation related to words such as "start recording" or "stop recording" is added to a usage dictionary.

In addition, examples of the operation target include a device connected to the information processing device 100-1. For example, the control unit 108 acquires information for specifying the connected external apparatus 10, and adds, to a usage dictionary, a correspondence relation related to operation words having a relatively high frequency of usage in the operation of the external apparatus 10 specified by the acquired information. Specifically, in the case of a television installed in a house, a correspondence relation related to words such as "change the program" is added to a usage dictionary. In the case of an air conditioner, a correspondence relation related to words such as "23°C" is added to a usage dictionary. In the case of audio apparatus, a correspondence relation related to words such as "stop the music" is added to a usage dictionary. In addition, in the case of car navigation installed in a vehicle, a correspondence relation related to words such as "give me directions" is added to a usage dictionary. In the case of a device for controlling windows of the vehicle, a correspondence relation related to words such as "open the window" is added to a usage dictionary.

In addition, examples of the object information of voice input operation include information for specifying an attribute of an operation target. Examples of the attribute of the operation target include a type, an installation position, an owner, any other group, and the like of the application or the external apparatus 10. For example, in the case where a type of an application indicates a content reproduction application, the control unit 108 adds a correspondence relation related to words such as "start reproduction" or "stop the reproduction" to a usage dictionary. Note that, a union of correspondence relations related to words regarding a plurality of operation targets of the same attribute may be added to a usage dictionary.

Note that, the correspondence relation added to the usage dictionary may be a part of the correspondence relations decided on the basis of object information of voice input operation. For example, it is possible for a user to set a correspondence relation to be added or an index for selecting the correspondence relation to be added. The control unit 108 selects the set correspondence relation as a correspondence relation serving as an addition target, or narrows down correspondence relations serving as addition targets on the basis of the set index. Note that, in the case where the user configures the setting, it is possible to provide the user with a list of correspondence relations decided on the basis of the object information of voice input operation.

In addition, although the example of adding the correspondence relation related to the operation words has been described above, it is also possible to add a correspondence relation related to words (hereinafter, also referred to as activation words) for activating an application or an apparatus. For example, in the case where a television is newly connected, a correspondence relation related to words "turn on the television" is added to a usage dictionary. Note that, different usage dictionaries may be used between the activation words and the operation words.

In addition, the usage dictionary may be changed on the basis of a plurality of pieces of object information. For example, in the case where a plurality of applications are activated, the control unit 108 may change the usage dictionary in accordance with the plurality of applications. In addition, in the case where an application is activated and an apparatus is connected to the information processing device 100-1, the control unit 108 may change the usage dictionary regarding the application and the apparatus. In addition, the control unit 108 may change the usage dictionary regarding only a piece of object information among the plurality of pieces of object information. For example, the control unit 108 may change the usage dictionary regarding only a piece of object information having a higher priority than other pieces of object information.

In addition, the control unit 108 may decide a correspondence relation between replacement targets on the basis of whether usage is permitted in the speech recognition process estimated from object information of voice input operation. Specifically, the control unit 108 decides a correspondence relation to be extracted on the basis of whether the usage is permitted, from among correspondence relations included in the usage dictionary. In addition, the control unit 108 decides a correspondence relation to be added to the usage dictionary on the basis of whether the usage is permitted. More specifically, the control unit 108 determines whether the usage dictionary includes a correspondence relation that is not allowed to be used in the speech recognition process regarding the voice input operation on the basis of object information of the voice input operation. When it is determined that the usage dictionary includes the correspondence relation that is not allowed to be used, the control unit 108 replaces the correspondence relation that is not allowed to be used with a correspondence relation that is allowed to be used in the speech recognition process regarding the voice input operation.

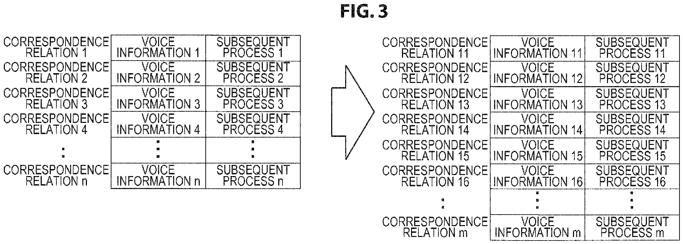

As another example of the usage dictionary control, the control unit 108 controls usage dictionaries in units of dictionaries. Specifically, the control unit 108 controls change in the usage dictionaries on the basis of object information of operation using voice input. For example, the control unit 108 changes the usage dictionary to a dictionary corresponding to object information of voice input operation. In addition, with reference to FIG. 3, details of the change in usage dictionaries will be described. FIG. 3 is a diagram illustrating the change in a usage dictionary in the information processing device 100-1 according to the embodiment.

The control unit 108 selects a dictionary corresponding to object information of voice input operation. For example, the control unit 108 selects the dictionary corresponding to object information of voice input operation from among a plurality of dictionaries stored in the storage unit 106. Note that, the size of the selected dictionary, in other words, amounts of correspondence relations in the dictionary may be different from the usage dictionary. As illustrated in FIG. 3, even when the size of the usage dictionary is n, the size of the selected dictionary may be m.

Next, the control unit 108 decides the selected dictionary as the usage dictionary. For example, the control unit 108 designates the selected dictionary as the usage dictionary. Note that, it is also possible to rewrite contents of the usage dictionary such that the contents of the usage dictionary are replaced with contents of the selected dictionary.

In addition, the control unit 108 may control a subject for performing the speech recognition process. Specifically, the control unit 108 causes at least one of the information processing device 100-1 and the server 200 to perform the speech recognition process. For example, when the voice input unit 102 provides voice information to the speech recognition unit 104, the control unit 108 causes both the speech recognition unit 104 and the server 200 to perform the speech recognition process.

In addition, the control unit 108 may decide a subject for performing the speech recognition process on the basis of whether the information processing device 100-1 is capable of communication. For example, in the case where it is difficult to establish communication with the server 200, the control unit 108 causes only the speech recognition unit 104 to perform the speech recognition process. Alternatively, in the case where it is possible to establish communication with the server 200, the control unit 108 causes both the speech recognition unit 104 and the server 200 or only the server 200 to perform the speech recognition process.

In addition, in the case of causing both the speech recognition unit 104 and the server 200 to perform the speech recognition process, the control unit 108 performs an arbitration process between respective results of the process. Specifically, the control unit 108 adopts one of speech recognition results on the basis of evaluation of the respective speech recognition results of the speech recognition unit 104 and the server 200. For example, in the case where recognition accuracy of the speech recognition unit 104 is less than a threshold, the control unit 108 waits until a speech recognition result of the server 200 is received. Alternatively, in the case where recognition accuracy of the speech recognition unit 104 is a threshold or more, the control unit 108 performs a subsequent process by using the speech recognition result of the speech recognition unit 104 without waiting for reception of a speech recognition result of the server 200.

### (Communication unit)

The communication unit 110 communicates with the server 200 and the external apparatus 10. Specifically, the communication unit 110 transmits a dictionary provision request, a speech recognition request, and voice information to the server 200, and receives a dictionary and a speech recognition result from the server 200. In addition, the communication unit 110 transmits an operation request and a dictionary provision request to the external apparatus 10, and receives a dictionary from the external apparatus 10. For example, the communication unit 110 broadcasts the dictionary provision request to respective external apparatuses 10 serving as operation targets, and receives dictionaries from the respective external apparatuses 10 that allow operation. Note that, the dictionary provision request is not transmitted to the external apparatus 10 in the case where the dictionary regarding the external apparatus 10 has already been stored in the storage unit 106 of the information processing device 100-1. Alternatively, in the case where the dictionary regarding the external apparatus 10 has already been stored in the server 200, the dictionary provision request is transmitted to the server 200 or the server 200 is caused to perform the speech recognition process.

### (Server)

The server 200 includes a communication unit 202, a control unit 204, a speech recognition unit 206, and a storage unit 208.

### (Communication unit)

The communication unit 202 communicates with the information processing device 100-1. Specifically, the communication unit 202 receives the dictionary provision request, the speech recognition request, and the voice information from the information processing device 100-1, and transmits a dictionary and a speech recognition result to the information processing device 100-1.

### (Control unit)

The control unit 204 controls entire operation of the server 200. Specifically, the control unit 204 controls the speech recognition process in response to the speech recognition request. For example, when the speech recognition request is received from the information processing device 100-1, the control unit 204 causes the speech recognition unit 206 to perform a speech recognition process based on voice information received together with or separately from the speech recognition request. Next, the control unit 204 causes the communication unit 202 to transmit the speech recognition result of the speech recognition unit 206 to the information processing device 100-1.

In addition, the control unit 204 performs a dictionary provision process in response to the dictionary provision request. Specifically, when the dictionary provision request is received from the information processing device 100-1, the control unit 204 acquires a dictionary (or a correspondence relation) from the storage unit 208 in response to the dictionary provision request. Next, the control unit 204 causes the communication unit 202 to transmit the acquired dictionary (or correspondence relation) to the information processing device 100-1.

### (Speech recognition unit)

The speech recognition unit 206 performs a speech recognition process on the basis of voice information. Note that, the speech recognition process of the speech recognition unit 206 is substantially the same as the process of the speech recognition unit 104 in the information processing device 100-1. Therefore, the description thereof will be omitted.

### (Storage unit)

The storage unit 208 stores information used in the speech recognition process. Specifically, the storage unit 208 stores dictionaries and correspondence relations. For example, the dictionaries stored in the storage unit 208 may be larger in size than the dictionaries stored in the information processing device 100-1. In addition, the number of dictionaries stored in the storage unit 208 may also be larger than the number of dictionaries stored in the information processing device 100-1.

### <1-2. Process performed by system>

Next, a process performed by the information processing system according to the embodiment will be described.

### (Entire process)

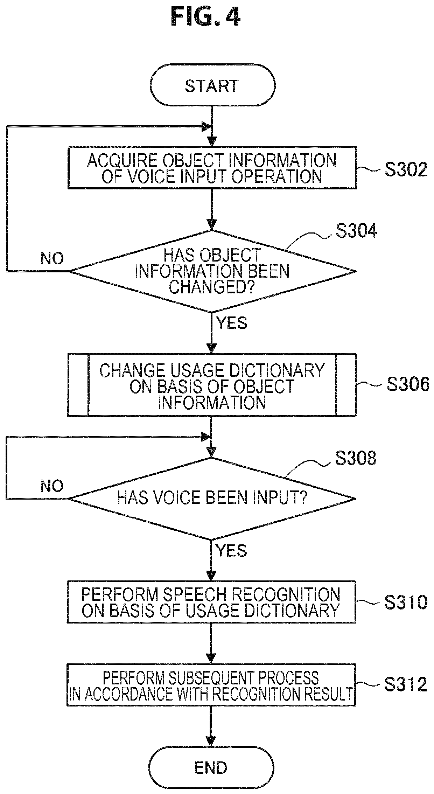

First, with reference to FIG. 4, an entire process performed by the information processing system according to the embodiment will be described. FIG. 4 is a flowchart conceptually illustrating an example of the entire process performed by the information processing system according to the embodiment.

The information processing device 100-1 acquires object information of voice input operation (Step S302). Specifically, the control unit 108 acquires information regarding running applications or the external apparatus 10 connected to the information processing device 100-1.

Subsequently, the information processing device 100-1 determines whether the object information has been changed (Step S304). Specifically, the control unit 108 determines presence or absence of change such as whether a new application is activated, whether the running application is deactivated, whether an external apparatus 10 is newly connected, or whether connection with the external apparatus 10 is broken.

When it is determined that the object information has been changed, the information processing device 100-1 changes the usage dictionary on the basis of the object information (Step S306). Specifically, the control unit 108 changes the usage dictionary regarding the application or the external apparatus 10 related to the change. Note that, details thereof will be described later.

Next, the information processing device 100-1 determines whether voice has been input (Step S308). Specifically, the speech recognition unit 104 determines whether the voice input unit 102 has provided the voice information.

When it is determined that the voice has been input, the information processing device 100-1 performs a speech recognition process on the basis of a dictionary (Step S310). Specifically, when voice information has been provided, the speech recognition unit 104 performs a speech recognition process regarding the provided voice information on the basis of the usage dictionary designated by the control unit 108.

Next, the information processing device 100-1 performs a subsequent process in accordance with a result of the speech recognition (Step S312). Specifically, the control unit 108 performs the subsequent process specified through the speech recognition process of the speech recognition unit 104.

### (Dictionary changing process)

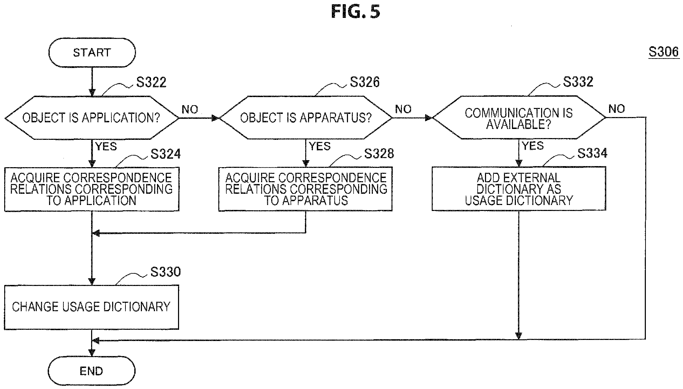

Next, with reference to FIG. 5, a dictionary changing process performed by the information processing system according to the embodiment will be described. FIG. 5 is a flowchart conceptually illustrating an example of the dictionary changing process performed by the information processing system according to the embodiment.

The information processing device 100-1 determines whether an object related to the change is an application (Step S322). Specifically, the control unit 108 determines whether there is an application determined to be newly activated or an application determined to be deactivated.

When it is determined that the object related to change is the application, the information processing device 100-1 acquires correspondence relations corresponding to the application (Step S324). Specifically, the control unit 108 acquires correspondence relations corresponding to the newly activated application from the storage unit 106 or the server 200. Note that, in the case where the application is deactivated, correspondence relations that correspond to running applications and that are not included in the usage dictionary are acquired.

In addition, the information processing device 100-1 determines whether the object related to change is the apparatus (Step S326). Specifically, the control unit 108 determines whether there is an external apparatus 10 determined to be newly connected or an external apparatus 10 determined to be disconnected.

When it is determined that the object related to change is the apparatus, the information processing device 100-1 acquires correspondence relations corresponding to the apparatus (Step S328). Specifically, the control unit 108 acquires correspondence relations corresponding to the newly connected apparatus 10 from the storage unit 106, the external apparatus 10, or the server 200. Note that, in the case where the connection with the external apparatus 10 is broken, correspondence relations that correspond to a connected external apparatus 10 and that are not included in the usage dictionary are acquired.

Next, when the correspondence relations are acquired, the information processing device 100-1 changes the usage dictionary (Step S330). Specifically, the control unit 108 selects a correspondence relation to be extracted from the usage dictionary, and replaces the selected correspondence relation with the acquired correspondence relation.

In addition, the information processing device 100-1 determines whether communication is available (Step S332). Specifically, the control unit 108 determines whether it possible to communicate with the server 200.

When it is determined that the communication is available, the information processing device 100-1 adds an external dictionary as the usage dictionary through the communication (Step S334). Specifically, when it is determined that communication with the server 200 is available, the control unit 108 decides both the speech recognition unit 104 of the information processing device 100-1 and the speech recognition unit 206 of the server 200 as subjects of the speech recognition process. This enables substantial change in the usage dictionary.

### <1-3. Summary of first embodiment

As described above, according to the first embodiment of the present disclosure, the information processing device 100-1 controls change in at least a part of correspondence relations between the voice information and processes based on the voice information in a set of the correspondence relations to be used in a speech recognition process, on the basis of object information of operation using the voice input. The voice information is acquired through the voice input.

In the prior art, there is a possibility that the device erroneously operates due to the voice input function. For example, sometimes voice for voice input operation and voice in daily conversation are not distinguished from each other, the voice in the daily conversation is recognized, and then operation is executed without user's intention. With regard to this problem, a method for inputting an operation word after inputting an activation word has been developed. However, the two-step voice operation may cause the user to feel that it is burdensome.

In addition, it is also considered to enlarge the size of the usage dictionary. However, when the size of the usage dictionary is enlarged, there is a possibility of increase in false recognition and a possibility of prolongation of processing time. Especially, in the case of analyzing voice of a complex sentence, longer processing time is necessary. On the other hand, when the size of the usage dictionary is reduced, a recognition rate can decrease.

In addition, it is also considered to perform a plurality of voice recognition processes using dictionaries having different sizes from each other. However, in this case, a process of arbitrating results of the plurality of speech recognition processes is necessary, and manufacturing costs and processing load can increase.

With regard to such problems, the information processing device 100-1 according to the embodiment is capable of appropriately replacing contents of the usage dictionary. Therefore, it is possible to prevent malfunction caused by recognizing voice in daily conversation without using the activation word. In addition, it is possible to improve the recognition rate without enlarging the size of the usage dictionary. This enables preventing increase in false recognition and prolongation of processing time. Accordingly, it is possible to achieve both improvement in recognition performance and shortening of processing time with regard to the speech recognition processes. In addition, it is also possible to improve the recognition rate without performing a plurality of speech recognition processes. This enables suppressing increase in manufacturing costs and processing load.

In addition, the correspondence relations related to change include a correspondence relation decided on the basis of usage information regarding the correspondence relation in the speech recognition process regarding operation estimated from object information of the operation. This enables optimizing correspondence relations in the usage dictionary regarding voice input operation in advance. Accordingly, it is possible to achieve both improvement in recognition performance and shortening of processing time while maintaining the size of the usage dictionary.

In addition, the usage information includes information for specifying frequency of usage. Accordingly, it is possible to improve the recognition rate while maintaining the size of the usage dictionary by replacing a correspondence relation having a relatively low possibility of usage in the speech recognition process with a correspondence relation having a relatively high possibility of usage in the speech recognition process, in the usage dictionary. Accordingly, it is possible to achieve improvement in recognition performance, suppression of false recognition, and shortening of processing time.

In addition, the usage information includes information for specifying whether usage is permitted. Therefore, it is possible to exclude a correspondence relation that is not allowed to be used in the speech recognition process, from the usage dictionary. For example, it is possible to previously exclude, from the usage dictionary, a correspondence relation that may provoke false recognition estimated from the application or the external apparatus 10. In addition, on the other hand, it is also possible to previously add, to the usage dictionary, a correspondence relation to be willingly recognized. This enables improvement in recognition performance more effectively.

In addition, the information processing device 100-1 further controls change in the set of correspondence relations on the basis of object information of the operation. Therefore, it is possible to change correspondence relations to be used in the speech recognition process in units of dictionaries. Accordingly, it is possible to promptly change contents of the usage dictionary, in other words, correspondence relations. Note that, it is also possible to change the usage dictionary by switching speech recognition processes which use different usage dictionaries.

In addition, the change in the set of the correspondence relations includes change into a different-sized set of correspondence relations. Accordingly, it is possible to prepare a usage dictionary that is more suitable for a speech recognition process regarding voice input estimated from object information, by changing contents of the usage dictionary and changing the size of the usage dictionary.

In addition, the correspondence relation is changed through communication. Therefore, it is possible to add, to the usage dictionary, a correspondence relation that is not included in the information processing device 100-1. This enables improvement in recognition performance in comparison with the case where the information processing device 100-1 operates alone.

In addition, the object information of the operation includes information for specifying an operation target or an attribute of the operation target. Therefore, it is possible to optimize contents of the usage dictionary on the basis of the target of voice input operation. This causes input voice to become likely to be recognized correctly, and causes recognition performance to improve effectively.

In addition, the operation target includes the application or the apparatus. Therefore, it is possible to add, to the usage dictionary, a correspondence relation suitable for voice input operation of a running application or an external apparatus 10 connected to the information processing device 100-1. Accordingly, it becomes easier to recognize voice in accordance with intentions of a user, and it is possible to smooth operation of the application or the external apparatus 10 through voice input.

In addition, the information processing device 100-1 further controls change in correspondence relations on the basis of whether the information processing device 100-1 is capable of communication. This enables collecting correspondence relations that are not stored in the information processing device 100-1. Therefore, it is possible to increase variation of usage dictionaries and further improves recognition performance. In addition, it is also possible to cause the server 200 to perform the speech recognition process in the case where it is possible to communicate with an external device such as the server 200 that is capable of performing the speech recognition process. In this case, the information processing device 100-1 does not perform the speech recognition process. This enables reduction in processing load. In addition, it is possible to use a highly evaluated speech recognition result among a plurality of speech recognition results, when the information processing device 100-1 also performs the speech recognition process.

In addition, the object information of the operation includes information estimated on the basis of information that has been acquired regarding an object of the operation. Therefore, it is possible to change the usage dictionary to an appropriate dictionary before the user conducts voice input operation. Accordingly, it is possible for the user to conduct smooth voice input operation form the beginning.

In addition, the voice information related to the correspondence relation includes voice information (activation word) indicating a start of the operation or voice information (operation word) indicating contents of the operation. Here, in general, recognition performance of the activation word or the operation word affects operability. For example, in the case where a plurality of times of speaking is necessary for correct recognition, there is a higher possibility that the user feels that the operation is cumbersome, in comparison with the case where only one-time speaking is necessary for correct recognition. With regard to this problem, according to the embodiment, it is possible to improve recognition performance of the activation word or the operation word and reduce a possibility that the user feels it is burdensome. In addition, this also enables suppressing prolongation of processing time. Therefore, it is possible to improve response performance to the speech and improve the operability more. Especially, in general, a smaller number of correspondence relations are prepared for the activation words than the operation words. In addition, it is important to decide which correspondence relation to be included in the usage dictionary. Therefore, usage of the information processing device 100-1 according to the embodiment becomes more meaningful.

### <1-4. Modification>

The first embodiment of the present disclosure has been described above. Note that, the present embodiment is not limited to the above described examples. Next, a modification of the embodiment will be described.

In the modification of the embodiment, the information processing device 100-1 may change the usage dictionary by using a speech recognition result. Specifically, the object information of operation may be information acquired through a speech recognition process. The control unit 108 controls change in the usage dictionary on the basis of the recognized information. Examples of the object information of the recognized operation include information for specifying operation contents. The control unit 108 controls change in the usage dictionary in accordance with the operation contents. For example, when recognizing voice "navigate to" regarding a request for a navigation application to provide a route to a certain destination, the control unit 108 adds, to the usage dictionary, a correspondence relation capable of recognizing the destination, or replaces the usage dictionary with a dictionary capable of recognizing the destination.

In addition, examples of the object information of the recognized operation include information for specifying an operation target. Specifically, examples of the operation targets include the above-described application, the above-described external apparatus 10, and the like. For example, when recognizing voice including a name or a type of an application, the control unit 108 adds, to the usage dictionary, a correspondence relation having a relatively high frequency of usage regarding the operation of the application having that name or that type, or replaces the usage dictionary with a dictionary including that correspondence relation.

In addition, when recognizing voice including a name or a type of the external apparatus 10, the control unit 108 adds, to the usage dictionary, a correspondence relation having a relatively high frequency of usage regarding the operation of the external apparatus 10 having that name or that type, or replaces the usage dictionary with a dictionary including that correspondence relation.

In addition, the operation target may be a speech recognition agent. For example, when recognizing voice including a name of the speech recognition agent, the control unit 108 replaces the operation target with the speech recognition agent.

In addition, as the notification control unit, the control unit 108 may control notification to the subject of the voice input operation regarding change in the usage dictionary. Specifically, the control unit 108 causes the information processing device 100-1 or an external device connected to the information processing device 100-1 to notify a user of information indicating that the usage dictionary has been changed. Note that, the notification may be any of visual notification, audible notification, haptic notification, and a combination thereof.

For example, in the case where the usage dictionary has been changed regarding the operation contents, the control unit 108 causes a speaker to output sound corresponding to the change in the usage dictionary. For example, when the voice "navigate to" has been recognized and the usage dictionary has been changed, the speaker outputs operation sound that prompts a user to input voice regarding a next destination. In addition, it is also possible to output recognized voice after recognizing the voice and before outputting the operation sound. In other words, it is possible to output the voice "navigate to". In this case, the user is capable of understanding whether the voice is recognized on the basis of intentions of the user.

In addition, for example, in the case where the usage dictionary has been changed regarding the application, the control unit 108 causes a display to display a display object corresponding to the change in the usage dictionary. For example, when the usage dictionary is changed regarding an application, text information displayed regarding the application is also changed.

In addition, for example, in the case where the usage dictionary has been changed regarding the external apparatus 10, the control unit 108 causes the external apparatus 10 to operate in accordance with the change in the usage dictionary. For example, the change in the usage dictionary regarding the external apparatus 10 causes a light emitting unit of the external apparatus 10 to emit light or cause the external apparatus 10 to vibrate. In addition, the control unit 108 causes the speaker to output sound unique to the external apparatus 10. Note that, the speaker may be installed in the information processing device 100-1, or may be installed in an external device connected to the information processing device 100-1 such as the external apparatus 10.

In addition, for example, when the speech recognition agent has been changed, the control unit 108 causes a response to be output in accordance with the changed speech recognition agent. For example, when the speech recognition agent is replaced, wording corresponding to the speech recognition agent is output. In addition, the control unit 108 may replace voice to be used as a response to a user in accordance with the speech recognition agent.

In addition, a process performed by an information processing system according to the modification of the embodiment will be described. Note that, description of substantially the same processes as the processes according to the first embodiment will be omitted.

### (Entire process)

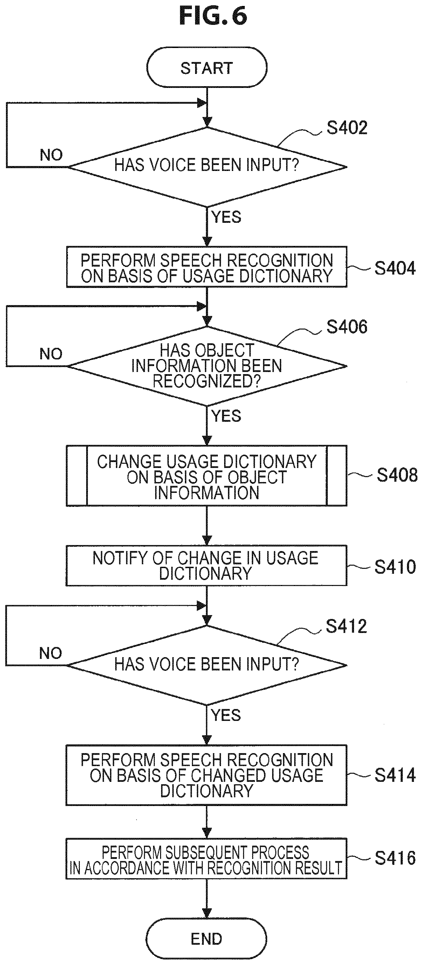

First, with reference to FIG. 6, an entire process performed by the information processing system according to the modification of the embodiment will be described. FIG. 6 is a flowchart conceptually illustrating an example of the entire process performed by the information processing system according to the modification of the embodiment.

The information processing device 100-1 determines whether voice has been input (Step S402). When it is determined that the voice has been input, the information processing device 100-1 performs a speech recognition process on the basis of a usage dictionary (Step S404).

Next, the information processing device 100-1 determines whether object information has been recognized (Step S406). When it is determined that the object information has been recognized, the information processing device 100-1 changes the usage dictionary on the basis of the object information (Step S408). Specifically, the control unit 108 determines whether text information indicating the object information is included in text information generated by the speech recognition unit 104. When it is determined that the text information indicating the object information is included in the generated text information, the control unit 108 changes the usage dictionary on the basis of the object information. Note that, details thereof will be described later.

Next, the information processing device 100-1 notifies of the change in the usage dictionary (Step S410). Specifically, the control unit 108 visually, audibly, or haptically notifies the user that the usage dictionary has been changed.

Next, the information processing device 100-1 determines whether voice has been input (Step S412). When it is determined that the voice has been input, the information processing device 100-1 performs a speech recognition process on the basis of the changed usage dictionary (Step S414). Next, the information processing device 100-1 performs a subsequent process in accordance with a result of the recognition (Step S416).

### (Dictionary changing process)

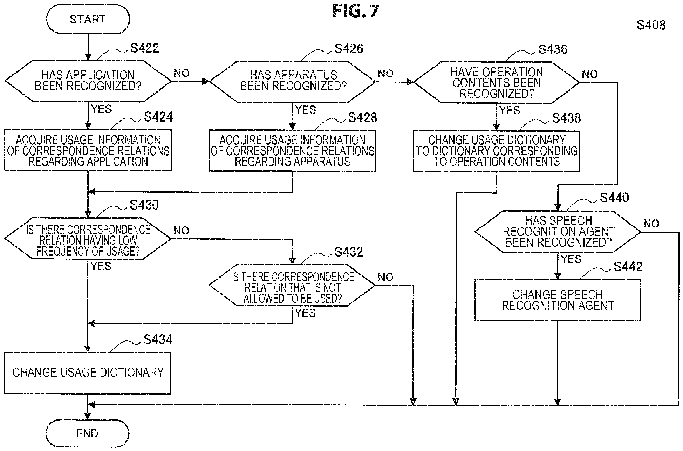

Next, with reference to FIG. 7, a dictionary changing process performed by the information processing system according to the modification of the embodiment will be described. FIG. 7 is a flowchart conceptually illustrating an example of the dictionary changing process performed by the information processing system according to the modification of the embodiment.

The information processing device 100-1 determines whether an application has been recognized (Step S422). Specifically, the control unit 108 determines whether text information indicating a name or a type of the application is included in text information generated by the speech recognition unit 104.

When it is determined that the application has been recognized, the information processing device 100-1 acquires usage information of correspondence relations regarding the application (Step S424). Specifically, the control unit 108 acquires, from the storage unit 106 or the like, frequency of usage of the correspondence relations and whether usage is permitted, regarding the recognized application.

In addition, the information processing device 100-1 determines whether an external apparatus 10 has been recognized (Step S426). Specifically, the control unit 108 determines whether text information indicating a name or a type of the external apparatus 10 is included in text information generated by the speech recognition unit 104.

When it is determined that the external apparatus 10 has been recognized, the information processing device 100-1 acquires usage information of correspondence relations regarding the external apparatus 10 (Step S428). Specifically, the control unit 108 acquires, from the storage unit 106 or the like, frequency of usage of the correspondence relations and whether usage is permitted, regarding the recognized external apparatus 10.

Next, the information processing device 100-1 determines whether the usage dictionary includes a correspondence relation with a relatively low frequency of usage (Step S430). Specifically, the control unit 108 determines whether the usage dictionary includes a correspondence relation having a relatively lower frequency of usage than a correspondence relation that is not included in the usage dictionary among correspondence relations regarding the recognized application or the recognized external apparatus 10.

In addition, the information processing device 100-1 determines whether the usage dictionary includes any correspondence relation that is not allowed to be used (Step S432). Specifically, the control unit 108 determines whether the usage dictionary includes any correspondence relation that is not allowed to be used among correspondence relations regarding the recognized application or the recognized external apparatus 10.

When it is determined that the usage dictionary includes a correspondence relation having a relatively low frequency of usage or a correspondence relation that is not allowed to be used, the information processing device 100-1 changes the usage dictionary (Step S434). Specifically, the control unit 108 replaces the correspondence relation having a relatively low frequency of usage or the correspondence relation that is not allowed to be used, with a correspondence relation having a relatively high frequency of usage or a correspondence relation that is allowed to be used.

In addition, the information processing device 100-1 determines whether operation contents have been recognized (Step S436). Specifically, the control unit 108 determines whether text information indicating the operation contents is included in text information generated by the speech recognition unit 104.

When it is determined that the operation contents have been recognized, the information processing device 100-1 changes the usage dictionary to a dictionary corresponding to the operation contents (Step S438). Specifically, the control unit 108 decides, as a subject of performing the speech recognition process, the speech recognition unit that uses the dictionary corresponding to the recognized operation contents as the usage dictionary.

In addition, the information processing device 100-1 determines whether a speech recognition agent has been recognized (Step S440). Specifically, the control unit 108 determines whether text information indicating the speech recognition agent is included in text information generated by the speech recognition unit 104.

When it is determined that the speech recognition agent has been recognized, the information processing device 100-1 changes the speech recognition agent (Step S442). Specifically, the control unit 108 changes a speech recognition agent to be used, to the recognized speech recognition agent.

As described above, according to the modification of the present embodiment, the object information of the operation includes information acquired through the speech recognition process. Therefore, it is possible to change the usage dictionary on the basis of voice input by the user. Accordingly, it is possible to change a usage dictionary to a dictionary suitable to operation based on intentions of the user, more certainly.

In addition, the information processing device 100-1 controls notification to a subject of voice input operation regarding change in the correspondence relations. Accordingly, when the user is notified of change in the usage dictionary, it is possible for the user to understand that preparation of voice input is completed. Therefore, it is possible to avoid failure of speech recognition caused by a user inputting voice before the usage dictionary is changed. This enables suppressing the user's dissatisfaction or stress.

### <2. Second embodiment (change in speech recognition dictionary on basis of subject information of voice input operation)>

The first embodiment and the modification thereof according to the present disclosure have been described above. Next, a second embodiment of the present disclosure will be described. An information processing system according to the second embodiment controls change in a speech recognition dictionary on the basis of subject information of voice input operation.

### <2-1. Configuration of system>

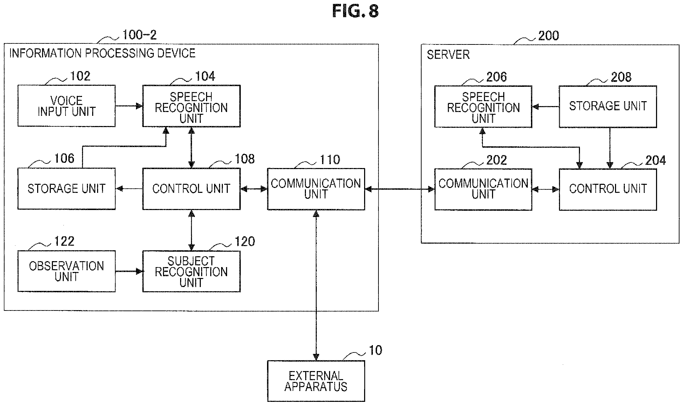

With reference to FIG. 8, a functional configuration of an information processing system according to the embodiment will be described. FIG. 8 is a block diagram schematically illustrating an example of a functional configuration of the information processing system according to the second embodiment of the present disclosure. Note that, description of substantially the same functions as the functions according to the first embodiment will be omitted.

### (Information processing device)

An information processing device 100-2 includes a subject recognition unit 120 and an observation unit 122 in addition to the voice input unit 102, the speech recognition unit 104, the storage unit 106, the control unit 108, and the communication unit 110.

### (Control unit)

The control unit 108 controls change in at least a part of the usage dictionary on the basis of subject information of operation using voice input. Specifically, the control unit 108 replaces correspondence relations in the usage dictionary. The correspondence relations are decided on the basis of usage information regarding the corresponding relations in a speech recognition process regarding the voice input operation estimated from subject information of voice input operation. For example, the control unit 108 decides a correspondence relation of replacement targets on the basis of frequency of usage or whether usage is permitted in the speech recognition process estimated from subject information of voice input operation. Subsequently, the control unit 108 replaces the decided correspondence relation.

Here, the subject information of voice input operation is information estimated on the basis of information acquired regarding a subject of the voice input operation. Examples of the subject information of the voice input operation include information for specifying a state of the subject of the operation. Examples of the state of the subject of the operation include an action of the subject of the operation. For example, the control unit 108 acquires information for specifying an action of a user generated by the subject recognition unit 120, and adds, to a usage dictionary, a correspondence relation related to an operation word having a relatively high frequency of usage in operation estimated to be conducted while the user is taking the action specified from the acquired information. Specifically, in the case where the recognized action is running, a correspondence relation related to words such as "stop the workout" or "back on the workout" is added to a usage dictionary. In the case where the recognized action is cycling, a correspondence relation related to words such as "which way is?" or "tell me average speed" is added to a usage dictionary. In the case where the recognized action is driving of a vehicle, a correspondence relation related to words such as "give me directions" or "move the wing mirror" is added to a usage dictionary.

In addition, the examples of the state of the subject of the operation also include an attitude of the subject of the operation. For example, the control unit 108 acquires information for specifying an attitude of a user generated by the subject recognition unit 120, and adds, to a usage dictionary, a correspondence relation related to an operation word having a relatively high frequency of usage in operation estimated to be conducted by the user in the attitude specified from the acquired information. Specifically, in the case where the recognized attitude indicates a supine position, a correspondence relation related to words such as "turn off the alarm clock" or "turn off the light" is added to a usage dictionary.

In addition, the examples of the state of the subject of the operation also include a position of the subject of the operation. For example, the control unit 108 acquires information for specifying a position of a user generated by the subject recognition unit 120, and adds, to a usage dictionary, a correspondence relation related to an operation word having a relatively high frequency of usage in operation estimated to be conducted by the user in the position specified from the acquired information. Specifically, in the case where the recognized position indicates an inside of a train, a correspondence relation related to words such as "how many stops is the transfer station from here?" or "set the silent mode" is added to a usage dictionary. Note that, the position of the subject of the operation may be geographical information, information indicating a landmark such as a building name, a facility name, or a place name, or information indicating a landform.

In addition, for example, the control unit 108 may add, to a usage dictionary, a correspondence relation related to words in a language having a relatively high frequency of usage in the position of the user. Specifically, in the case where the recognized position indicates the United States of America, correspondence relations related to English words are added to a usage dictionary. In the case where the recognized position indicates Osaka, correspondence relations related to words of the Kansai dialect are added to a usage dictionary.

In addition, examples of the subject information of the voice input operation include information for specifying an environment around a subject of the voice input operation. Specifically, examples of the environment around the subject of the operation include noise. For example, the control unit 108 acquires information for estimating noise around a user generated by the subject recognition unit 120, and adds, to a usage dictionary, a correspondence relation related to an operation word having a relatively high frequency of usage in a speech recognition process in accordance with a degree of the noise around the user estimated from the acquired information. Specifically, in the case where the degree of the recognized noise is greater than or equal to a threshold, correspondence relations related to words such as onomatopoeias are extracted from the usage dictionary as correspondence relations that are not allowed.

Note that, the correspondence relation added to the usage dictionary may be a part of the correspondence relations decided on the basis of subject information of voice input operation. In addition, the usage dictionary may be changed on the basis of a plurality of pieces of subject information. For example, the control unit 108 may change the usage dictionary regarding positions and actions of a user in the case where the user is reading an electronic book in a train. In addition, the control unit 108 may change the usage dictionary regarding only a piece of subject information among the plurality of pieces of subject information. In addition, the control unit 108 may control change in the usage dictionary on the basis of subject information of operation using voice input.

### (Subject recognition unit)

The subject recognition unit 120 performs a recognition process regarding a subject of voice input operation. Specifically, the subject recognition unit 120 recognizes an action, an attitude, or a position of a user on the basis of information acquired from the observation unit 122. For example, the subject recognition unit 120 recognizes an action, an attitude, or a position of the user on the basis of inertia information such as acceleration or angular velocity, Global Positioning System (GPS) information, or image information acquired from the observation unit 122. Note that, in addition to the information acquired from the observation unit 122, it is also possible to use information acquired from an external device via the communication unit 110. For example, it is possible to use schedule information of the user stored in the external device.

### (Observation unit)

The observation unit 122 observes a subject of voice input operation. Specifically, the observation unit 122 observes movement, attitudes, or positions of the user. For example, the observation unit 122 generates the inertia information, position information, or image information regarding the user by using an inertia sensor such as an acceleration sensor or an angular velocity sensor, a GPS sensor, or an imaging sensor.

### <2-2. Process performed by system>

Next, a process performed by the information processing system according to the embodiment will be described. Note that, description of substantially the same processes as the processes according to the first embodiment will be omitted.

### (Entire process)

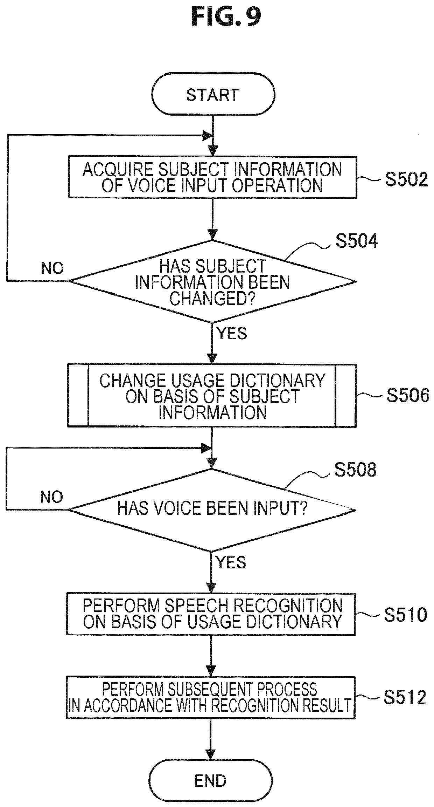

First, with reference to FIG. 9, an entire process performed by the information processing system according to the embodiment will be described. FIG. 9 is a flowchart conceptually illustrating an example of the entire process performed by the information processing system according to the embodiment.

The information processing device 100-2 acquires subject information of voice input operation (Step S502). Specifically, the subject recognition unit 120 performs a recognition process regarding actions, attitudes, positions, or an ambient environment of a user, on the basis of inertia information, position information, or image information acquired from the observation unit 122. Next, the control unit 108 acquires information related to the actions, attitudes, positions, or ambient environment of the user recognized by the subject recognition unit 120.

Next, the information processing device 100-2 determines whether the subject information has been changed (Step S504). Specifically, the control unit 108 determines whether the action, attitude, position, or ambient environment of the user has been changed, on the basis of information acquired from the subject recognition unit 120.

When it is determined that the subject information has been changed, the information processing device 100-2 changes the usage dictionary on the basis of the subject information (Step S506). Specifically, the control unit 108 changes the usage dictionary regarding the actions, attitudes, positions, or ambient environments related to the change. Note that, details thereof will be described later.

The information processing device 100-2 determines whether voice has been input (Step S508). When it is determined that the voice has been input, the information processing device 100-2 performs a speech recognition process on the basis of a usage dictionary (Step S510). Next, the information processing device 100-2 performs a subsequent process in accordance with a result of speech recognition (Step S512).

### (Dictionary changing process)

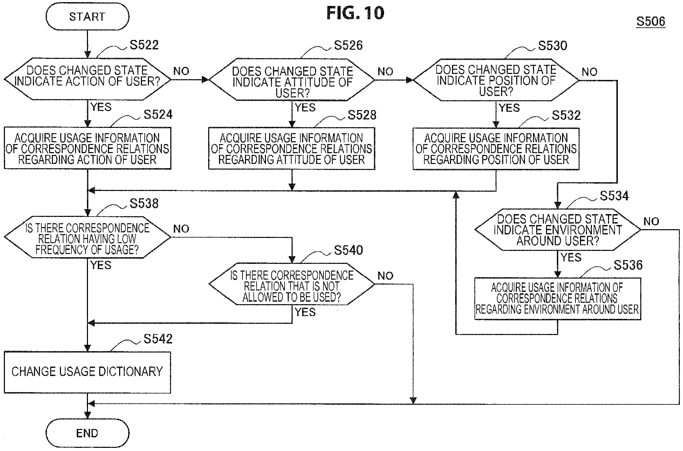

Next, with reference to FIG. 10, a dictionary changing process performed by the information processing system according to the embodiment will be described. FIG. 10 is a flowchart conceptually illustrating an example of the dictionary changing process performed by the information processing system according to the embodiment.

The information processing device 100-2 determines whether the changed state indicates an action of the user (Step S522). When it is determined that the action of the user has changed, the information processing device 100-2 acquires usage information of correspondence relations regarding the changed action of the user (Step S524). Specifically, when it is determined that the action of the user recognized by the subject recognition unit 120 has been changed from a previously recognized action, the control unit 108 acquires, from the storage unit 106 or the like, frequency of usage of the correspondence relations and information regarding whether usage is permitted, with regard to the changed action of the user.

In addition, the information processing device 100-2 determines whether the changed state indicates an attitude of the user (Step S526). When it is determined that the attitude of the user has changed, the information processing device 100-2 acquires usage information of correspondence relations regarding the changed attitude of the user (Step S528). Specifically, when it is determined that the attitude of the user recognized by the subject recognition unit 120 has been changed from a previously recognized attitude, the control unit 108 acquires, from the storage unit 106 or the like, frequency of usage of the correspondence relations and information regarding whether usage is permitted, with regard to the changed attitude of the user.

In addition, the information processing device 100-2 determines whether the changed state indicates a position of the user (Step S530). When it is determined that the position of the user has changed, the information processing device 100-2 acquires usage information of correspondence relations regarding the changed position of the user (Step S532). Specifically, when it is determined that the position of the user recognized by the subject recognition unit 120 has been changed from a previously recognized position, the control unit 108 acquires, from the storage unit 106 or the like, frequency of usage of the correspondence relations and information regarding whether usage is permitted, with regard to the changed position of the user.

In addition, the information processing device 100-2 determines whether the changed state indicates an environment around the user (Step S534). When it is determined that the environment around the user has changed, the information processing device 100-2 acquires usage information of correspondence relations regarding the changed environment around the user (Step S536). Specifically, when it is determined that the environment around the user recognized by the subject recognition unit 120 has changed from a previously recognized ambient environment, the control unit 108 acquires, from the storage unit 106 or the like, frequency of usage of the correspondence relations and information regarding whether usage is permitted, with regard to the changed environment around the user.

Next, the information processing device 100-2 determines whether the usage dictionary includes a correspondence relation having a relatively low frequency of usage (Step S538), and further determines whether the usage dictionary includes a correspondence relation that is not allowed to be used (Step S440). Subsequently, when it is determined that the usage dictionary includes a correspondence relation having a relatively low frequency of usage or a correspondence relation that is not allowed to be used, the information processing device 100-2 changes the usage dictionary (Step S542).

### <2-3. Summary of second embodiment

As described above, according to the second embodiment of the present disclosure, the information processing device 100-2 controls change in at least a part of correspondence relations between the voice information and processes based on the voice information in a set of the correspondence relations to be used in a speech recognition process, on the basis of subject information of operation using the voice input. The voice information is acquired through the voice input. Therefore, as described above, it is possible to replace contents of a usage dictionary appropriately. Specifically, in the voice input operation, a user outputting voice greatly affects a speech recognition process. The voice serves as an input of the speech recognition process. Therefore, when contents of the usage dictionary are changed on the basis of such information of the user, it is possible to effectively suppress malfunction in speech recognition, improvement in a recognition rate, false recognition, and prolongation of processing time. In other words, it is possible to achieve both improvement in recognition performance and shortening of processing time with regard to the speech recognition process.

In addition, the subject information of the operation includes information for specifying a state of the subject of the operation. Therefore, it is possible to optimize contents of the usage dictionary on the basis of the state of the user who conducts voice input operation. This causes input voice to become likely to be recognized correctly, and causes recognition performance to improve effectively.

In addition, the state of the subject of the operation includes an action, an attitude, or a position of the subject of the operation. Therefore, it is possible to prepare a usage dictionary including a correspondence relation related to voice that is desired to be subjected to speech recognition regarding the recognized action, attitude, or position of the user. Accordingly, it becomes easier to recognize voice in accordance with intentions of a user, and it is possible to smooth the voice input operation.

In addition, the subject information of the operation includes information for specifying an environment around the subject of the operation. Therefore, it is possible to prepare a usage dictionary including a correspondence relation related to voice that is desired to be subjected to speech recognition regarding the recognized environment around the user. Accordingly, it becomes easier to recognize voice in accordance with intentions of a user, and it is possible to smooth the voice input operation.

### <2-4. Modification>

The second embodiment of the present disclosure has been described above. Note that, the embodiment is not limited to the above described examples. Next, a modification of the embodiment will be described.

According to the modification of the embodiment, the subject information of voice input operation may be information for specifying a subject of the voice input operation. Specifically, the subject recognition unit 120 specifies the subject of the voice input operation on the basis of information provided by the voice input unit 102. Next, the control unit 108 changes the usage dictionary to a dictionary corresponding to the subject specified by the subject recognition unit 120. For example, the subject recognition unit 120 specifies a speaking person of voice related to voice information, on the basis of voice information provided by the voice input unit 102. Note that, a voiceprint analysis technology may be used for specifying the speaking person. Next, the control unit 108 acquires, from the storage unit 106 or the like, a group of dictionaries or correspondence relations corresponding to the speaking person specified by the subject recognition unit 120. The control unit 108 changes the usage dictionary to the acquired dictionary, or replaces a part of the usage dictionary with the acquired group of correspondence relations.

Accordingly, for example, in the case where the information processing device 100-2 is shared by a family, the usage dictionary is changed to a dictionary by which voice of a father is easily recognized when the father uses the information processing device 100-2, and the usage dictionary is changed to a dictionary by which voice of a mother is easily recognized when the mother uses the information processing device 100-2. In addition, it is also possible to change the usage dictionary such that the dictionary for the mother does not include correspondence relations set for the father.

In addition, the usage dictionary may be changed regarding an operation target held by a subject of the voice input operation. For example, the control unit 108 may change the usage dictionary regarding the external apparatus 10 or an application owned by a specified speaking person, in other words, the user.

Note that, a group of dictionaries or correspondence relations corresponding to a speaking person may be set in advance. For example, it is possible for a user to previously set a group of dictionaries or correspondence relations. In addition, of course, the setting of the group of the dictionaries or the correspondence relations may be changed afterwards. In addition, of course, the group of the dictionaries or the correspondence relations may be automatically set. For example, a setting of a group of dictionaries or correspondence relations having high frequencies of usage may be configured for each user, by performing machine learning on the usage dictionaries and the speech recognition results for each user.

In addition, the subject information of voice input operation may be information for specifying an attribute of a subject of the voice input operation. Specifically, the control unit 108 changes the usage dictionary to a dictionary corresponding to the specified attribute of the subject. Examples of the attribute of the subject include age, sex, a skeleton, a race, an address, a hometown, and the like. Specifically, with regard to the age of a user, the usage dictionary is changed to a dictionary including correspondence relations related to words corresponding to ways to speak that are common to a corresponding age group. In addition, with regard to a hometown of a user, the usage dictionary is changed to a dictionary including correspondence relations related to words corresponding to a dialect of a corresponding area.

In addition, a process performed by an information processing system according to the modification of the embodiment will be described. Note that, description of substantially the same processes as the processes according to the above-described embodiment will be omitted.

### (Entire process)

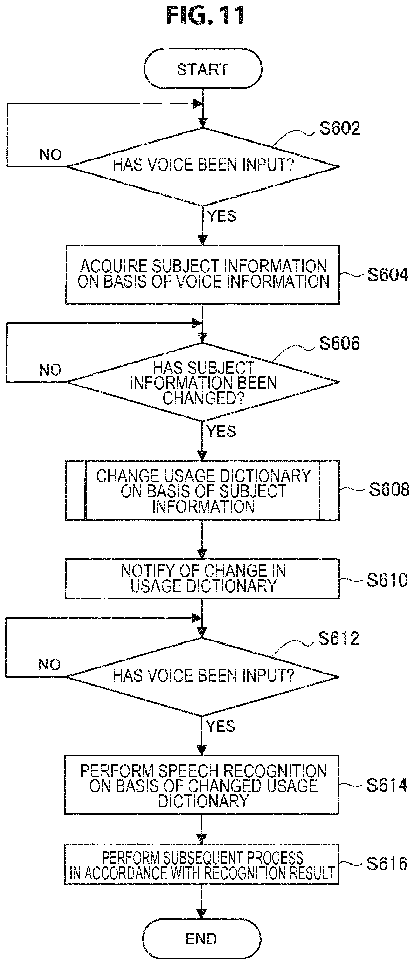

First, with reference to FIG. 11, an entire process performed by the information processing system according to the modification of the embodiment will be described. FIG. 11 is a flowchart conceptually illustrating an example of the entire process performed by the information processing system according to the modification of the embodiment.

The information processing device 100-2 determines whether voice has been input (Step S602). When it is determined that the voice has been input, the information processing device 100-2 acquires subject information on the basis of the input voice (Step S604). Specifically, when voice information has been provided by the voice input unit 102, the subject recognition unit 120 determines a subject or an attribute of the subject on the basis of the voice information.

Next, the information processing device 100-2 determines whether the subject information has been changed (Step S606). Specifically, when information for specifying the subject or the attribute of the subject is provided through the determination made by the subject recognition unit 120, the control unit 108 determines whether the subject or the attribute of the subject has been changed on the basis of the information.

When it is determined that the subject information has been changed, the information processing device 100-2 changes the usage dictionary on the basis of the subject information (Step S608). Specifically, when it is determined that the subject or the attribute of the subject has been changed, the control unit 108 changes the usage dictionary regarding the changed subject or the changed attribute of the subject. Note that, details thereof will be described later.

Next, the information processing device 100-2 notifies of the change in the usage dictionary (Step S610). When voice has been input (Step S612), the information processing device 100-2 performs a speech recognition process on the basis of the changed usage dictionary (Step S614). Next, the information processing device 100-2 performs a subsequent process in accordance with a result of the recognition (Step S616).

### (Dictionary changing process)

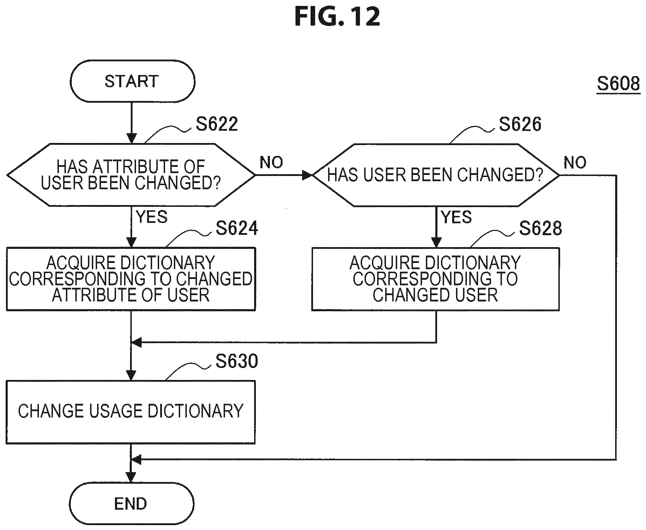

Next, with reference to FIG. 12, a dictionary changing process performed by the information processing system according to the modification of the embodiment will be described. FIG. 12 is a flowchart conceptually illustrating an example of the dictionary changing process performed by the information processing system according to the modification of the embodiment.

The information processing device 100-2 determines whether the attribute of the user has been changed (Step S622). When it is determined that the attribute of the user has been changed, the information processing device 100-2 acquires a dictionary corresponding to the changed attribute of the user (Step S624). Specifically, when it is determined that the attribute of the user recognized by the subject recognition unit 120 has been changed to an attribute that is different from a previously recognized attribute of the user, the control unit 108 acquires, from the storage unit 106 or the like, a dictionary corresponding to the changed attitude of the user.

In addition, the information processing device 100-2 determines whether the user has been changed (Step S626). When it is determined that the user has been changed, the information processing device 100-2 acquires a dictionary corresponding to the changed user (Step S628). Specifically, when it is determined that the user recognized by the subject recognition unit 120 has been changed to an attribute that is different from the previously recognized user, the control unit 108 acquires, from the storage unit 106 or the like, a dictionary corresponding to the changed user.

Next, the information processing device 100-2 changes the usage dictionary (Step S630). Specifically, the control unit 108 changes the usage dictionary to the acquired dictionary.

As described above, according to the modification of the embodiment, the subject information of voice input operation may include information for specifying a subject of the voice input operation or an attribute of the subject. Therefore, it is possible to prepare a usage dictionary suitable for a subject of voice input operation. This causes input voice to become likely to be recognized correctly, and causes recognition performance to improve effectively. In addition, in the case where a usage dictionary corresponding to each user is prepared, it is possible to improve usability and operability for each user.

Note that, the example in which a subject or an attribute of the subject is specified on the basis of voice information has been described above. However, it is also possible to specify a subject or an attribute of the subject on the basis of image information. For example, it is possible to specify an individual user or an attribute of the user by using a face recognition technology or the like.

### <3. Hardware configuration of information processing device according to embodiment of present disclosure>

The information processing devices 100 according to the respective embodiments of the present disclosure have been described above. The processing performed by the information processing device 100 is achieved by cooperatively operating software and hardware of the information processing device 100 described below.

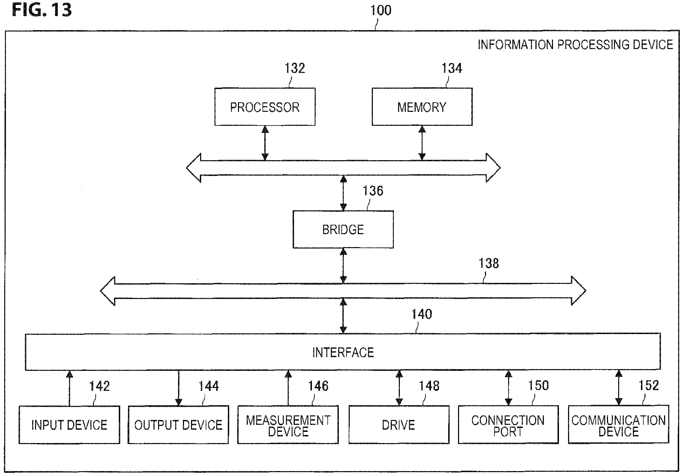

FIG. 13 is an explanatory diagram illustrating a hardware configuration of the information processing device 100 according to an embodiment of the present disclosure. As illustrated in FIG. 13, the information processing device 100 includes a processor 132, a memory 134, a bridge 136, a bus 138, an interface 140, an input device 142, an output device 144, a measurement device 146, a drive 148, a connection port 150, and a communication device 152.

### (Processor)

The processor 132 functions as an arithmetic processing device, and achieves the functions of the speech recognition unit 104, the control unit 108, and the subject recognition unit 120 in the information processing device 100 by cooperatively operating with various programs. The processor 132 causes various logical functions of the information processing device 100 to operate, by using a control circuit to execute programs stored in the memory 134 or another storage medium. For example, the processor 132 may be a central processing unit (CPU), a graphics processing unit (GPU), a digital signal processor (DSP), or a system on chip (SoC).

### (Memory)

The memory 134 stores a program, a calculation parameter, and the like used by the processor 132. For example, the memory 134 includes a random access memory (RAM), and transiently stores programs used for executing the processor 132, parameters or the like that change as appropriate when executing the processor 132. In addition, the memory 134 includes a read only memory (ROM), and functions as the storage unit by using the RAM and the ROM. Note that, an external storage device may be used as a part of the memory 134 via the connection port 150 or the communication device 152.

Note that, the processor 132 and the memory 134 are connected to each other via an internal bus including a CPU bus or the like.

### (Bridge and bus)

The bridge 136 connects buses. Specifically, the bridge 136 connects the internal bus and the bus 138. The internal bus is connected to the processor 132 and the memory 134. The bus 138 is connected to the interface 140.

### (Input device)

The input device 142 is used by a user for operating the information processing device 100 or inputting information to the information processing device 100. The input device 142 functions as the voice input unit 102. For example, the input device 142 includes an input means to which the user inputs information, and an input control circuit that generates an input signal on the basis of the user input and outputs the generated input signal to the processor 132. Note that, the input means may be a mouse, a keyboard, a touchscreen, a switch, a lever, a microphone, or the like. By operating the input unit 142, the user of the information processing device 100 can input various kinds of data into the information processing device 100 and instruct the information processing device 100 to perform a processing operation.

### (Output device)

The output device 144 is used for notifying a user of information. The output device 144 functions as an input/output unit. The display device 144 may be a display device or a sound output device. For example, the output device 144 may be a device such as a liquid crystal display (LCD) device, an organic light emitting diode (OLED) device, a projector, a speaker, or a headphone, or may be a module configured to output information to such a device.

Note that, the input device 142 or the output device 144 may include an input/output device. For example, the input/output device may be a touchscreen.

### (Measurement device)

The measurement device 146 measures events occurred in and around the information processing device 100, and operates as the observation unit 122 of the information processing device 100. For example, the measurement device 146 may be the inertia sensor such as the acceleration sensor or the angular velocity sensor, the GPS sensor, or the imaging sensor. Note that, the measurement device 146 may include an environment sensor configured to measure temperature, humidity, barometric pressure, or the like, or a biosensor configured to measure a body temperature, a pulse, perspiration, or the like, or a plurality of types of sensors.

### (Drive)

The drive 148 is a reader/writer for a storage medium, and is incorporated in or externally attached to the information processing device 100. The drive 148 reads information stored in a removable storage medium that is mounted, such as a magnetic disk, an optical disc, a magneto-optical disk, or semiconductor memory, and outputs the information to the memory 134. The drive 148 is also capable of writing information to the removable storage medium.

### (Connection port)

The connection port 150 is a port used to directly connect apparatuses to the information processing device 100. For example, the connection port 150 may be a USB (Universal Serial Bus) port, an IEEE1394 port, or a SCSI (Small Computer System Interface) port. In addition, the connection port 150 may be an RS-232C port, an optical audio terminal, an HDMI (registered trademark) (High-Definition Multimedia Interface) port, or the like. Data may be exchanged between the information processing device 100 and an external apparatus by connecting the external apparatus to the connection port 150.

### (Communication device)

The communication device 152 mediates communication between the information processing device 100 and an external device, and functions as the communication unit 110. Specifically, the communication device 152 establishes communication in accordance with a wireless communication scheme or a wired communication scheme. For example, the communication device 152 establishes wireless communication in accordance with a cellular communication scheme such as Wideband Code Division Multiple Access (W-CDMA) (registered trademark), WiMAX (registered trademark), Long-Term Evolution (LTE), or LTE-A. Note that, the communication device 152 may establish wireless communication in accordance with any wireless communication scheme like a short-range wireless communication such as Bluetooth (registered trademark), near-field communication (NFC), wireless USB, or TransferJet (registered trademark), or a wireless local area network (LAN) such as Wi-Fi (registered trademark). In addition, the communication device 152 may establish wired communication such as signal line communication or wired LAN communication.

Note that, the information processing device 100 does not have to include a part of the structural elements described with reference to FIG. 13. In addition, the information processing device 100 may include any additional structural element. In addition, it is possible to provide a one-chip information processing module in which a part or all structural elements described with reference to FIG. 13 are integrated.

### <4. Conclusion>

As described above, according to the first embodiment of the present disclosure, it is possible to replace contents of a usage dictionary appropriately. Therefore, it is possible to prevent malfunction caused by recognizing voice in daily conversation, without using the activation word. In addition, it is possible to improve the recognition rate without enlarging the size of the usage dictionary. This enables suppressing increase in false recognition and prolongation of processing time. Accordingly, it is possible to achieve both improvement in recognition performance and shortening of processing time with regard to the speech recognition processes. In addition, it is also possible to improve the recognition rate without performing a plurality of speech recognition processes. This enables suppressing increase in manufacturing costs and processing load.

In addition, according to the second embodiment of the present disclosure, it is possible to replace contents of a usage dictionary appropriately. Specifically, in the voice input operation, a user outputting voice greatly affects the speech recognition process. The voice serves as an input of the speech recognition process. Therefore, when the contents of the usage dictionary are changed on the basis of such information of the user, it is possible to effectively suppress malfunction in speech recognition, improvement in a recognition rate, false recognition, and prolongation of processing time. In other words, it is possible to achieve both improvement in recognition performance and shortening of processing time with regard to the speech recognition process.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above-described embodiments, the information processing system (in other words, the information processing device 100 and the server 200) performs the processes. However, the present technology is not limited thereto. For example, the information processing device 100 alone may perform the processes. In addition, the information processing device 100 may include a plurality of memories having different access speeds and storage capacities, and may perform the above-described processes using both the information processing device 100 and the server 200 by using the plurality of memories. For example, the information processing device 100 includes a first memory and a second memory. The first memory has a faster access speed than the second memory, but has a smaller storage capacity than the second memory. Alternatively, the second memory has a slower access speed than the first memory, but has a larger storage capacity than the first memory. In addition, the information processing device 100 first uses a dictionary stored in the first memory as the usage dictionary. When the speech recognition using the dictionary stored in the first memory has failed, the information processing device 100 uses a dictionary stored in the second memory as the usage dictionary. Needless to say, the dictionaries stored in the first memory and the second memory are optimized through the above-described dictionary changing process. As described above, by using the plurality of memories having different access speeds and storage capacities, it is possible to achieve both speeding up of process responses to voice input, maintenance of or improvement in a success rate of speech recognition. The above-described configuration is meaningful especially in the case where the information processing device 100 alone performs the processes.

In addition, the example in which the usage dictionary is changed regarding each of the object information and the subject information of voice input operation has been described in the above-described embodiments. However, it is also possible to change the usage dictionary regarding a combination of the object information and the subject information.

In addition, it is possible to use time information for changing the usage dictionary in addition to the object information and the subject information. Examples of the time information include hours/minutes, a date, a day of the week, daytime/nighttime, a season, and the like. For example, the information processing device 100 may change the usage dictionary to a dictionary corresponding to a combination of running applications and a time slot, or a dictionary including a correspondence relation corresponding to the combination. In this case, it is possible to correctly recognize voice easier by changing the usage dictionary in accordance with a more detailed situation. This enables more improvement in recognition performance.

In addition, the example in which correspondence relations in the usage dictionary are replaced has been mainly described in the above-described embodiments. However, it is also possible to just extract a correspondence relation from the usage dictionary. For example, in the case where recognition performance is estimated to decrease or processing time is estimated to be prolonged, the information processing device 100 extracts a correspondence relation having a relatively low frequency of usage from the usage dictionary. This causes reduction in the number of correspondence relations in the usage dictionary. Therefore, it is possible to lower a possibility of false recognition. In addition, it is also possible to shorten the processing time, in other words, response time.

In addition, the example of changing the usage dictionary has been mainly described in the above embodiments. However, the usage dictionary does not have to be changed. For example, in the case where there is no correspondence relation to be replaced, it is possible for the information processing device 100 to stop changing the usage dictionary.

Further, the effects described in this specification are merely illustrative or exemplified effects, and are not limitative. That is, with or in the place of the above effects, the technology according to the present disclosure may achieve other effects that are clear to those skilled in the art from the description of this specification.

Further, not only a process in which steps shown in the flowcharts of the above embodiments are performed in a time-series manner in accordance with a described sequence but also a process in which the steps are not necessarily processed in a time-series manner but are executed in parallel or individually is included. Also, it is self-evident that even steps processed in a time-series manner can be appropriately changed in sequence depending on circumstances.

In addition, a computer program for causing hardware built in the information processing device 100 to exhibit functions equivalent to those of the above-described respective structural elements of the information processing device 100 can also be produced. Furthermore, a storage medium in which the computer program is stored is also provided.

Additionally, the present technology may also be configured as below.
(1) An information processing device including:
   an acquisition unit configured to acquire voice information acquired through voice input; and
   a control unit configured to control change in at least a part of correspondence relations between the voice information and processes based on the voice information in a set of the correspondence relations to be used in a speech recognition process, on a basis of object information of operation using the voice input or subject information of the operation.
(2) The information processing device according to (1),
   in which the correspondence relations related to change include the correspondence relation decided on a basis of usage information regarding the correspondence relation in the speech recognition process regarding the operation estimated from the object information of the operation or the subject information of the operation.
(3) The information processing device according to (2),
   in which the usage information includes information for specifying frequency of usage.
(4) The information processing device according to (2) or (3),
   in which the usage information includes information for specifying whether usage is permitted.
(5) The information processing device according to any one of (1) to (4),
   in which the control unit further controls change in the set of the correspondence relations on a basis of the object information of the operation or the subject information of the operation.
(6) The information processing device according to (5),
   in which the change in the set of the correspondence relations includes change into a different-sized set of the correspondence relations.
(7) The information processing device according to any one of (1) to (6),
   in which the correspondence relation is changed through communication.
(8) The information processing device according to any one of (1) to (7),
   in which the object information of the operation includes information for specifying an operation target or an attribute of the operation target.
(9) The information processing device according to (8),
   in which the operation target includes an application or an apparatus.
(10) The information processing device according to any one of (1) to (9),
   in which the control unit further controls change in the correspondence relation on a basis of whether the information processing device is capable of communication.
(11) The information processing device according to any one of (1) to (10),
   in which the subject information of the operation includes information for specifying a state of a subject of the operation.
(12) The information processing device according to (11),
   in which the state of the subject of the operation includes an action, an attitude, or a position of the subject of the operation.
(13) The information processing device according to any one of (1) to (12),
   in which the subject information of the operation includes information for specifying an environment around a subject of the operation.
(14) The information processing device according to any one of (1) to (13),
   in which the subject information of the operation includes information for specifying a subject of the operation or an attribute of the subject of the operation.
(15) The information processing device according to any one of (1) to (14),
   in which the object information of the operation or the subject information of the operation includes information estimated on a basis of information acquired with regard to an object or a subject of the operation.
(16) The information processing device according to any one of (1) to (15),
   in which the object information of the operation or the subject information of the operation includes information acquired through the speech recognition process.
(17) The information processing device according to any one of (1) to (16), further including a notification control unit configured to control notification to a subject of the operation regarding the change in the correspondence relation.
(18) The information processing device according to any one of (1) to (17),
   in which the voice information related to the correspondence relation includes voice information indicating a start of the operation or voice information indicating a content of the operation.
(19) An information processing method including, by using a processor:
   acquiring voice information acquired through voice input; and
   controlling change in at least a part of correspondence relations between the voice information and processes based on the voice information in a set of the correspondence relations to be used in a speech recognition process, on a basis of object information of operation using the voice input or subject information of the operation.
(20) A program causing a computer to achieve:
   an acquisition function of acquiring voice information acquired through voice input; and
   a control function of controlling change in at least a part of correspondence relations between the voice information and processes based on the voice information in a set of the correspondence relations to be used in a speech recognition process, on a basis of object information of operation using the voice input or subject information of the operation.

### Reference Signs List

- 100: information processing device
- 102: voice input unit
- 104: speech recognition unit
- 106: storage unit
- 108: control unit
- 110: communication unit
- 120: subject recognition unit
- 122: observation unit
- 200: server

## Claims

1. An information processing device comprising:
an acquisition unit configured to acquire voice information acquired through voice input; and
a control unit configured to control change in at least a part of correspondence relations between the voice information and processes based on the voice information in a set of the correspondence relations to be used in a speech recognition process, on a basis of object information of operation using the voice input or subject information of the operation.

2. The information processing device according to claim 1,
wherein the correspondence relations related to change include the correspondence relation decided on a basis of usage information regarding the correspondence relation in the speech recognition process regarding the operation estimated from the object information of the operation or the subject information of the operation.

3. The information processing device according to claim 2,
wherein the usage information includes information for specifying frequency of usage.

4. The information processing device according to claim 2,
wherein the usage information includes information for specifying whether usage is permitted.

5. The information processing device according to claim 1,
wherein the control unit further controls change in the set of the correspondence relations on a basis of the object information of the operation or the subject information of the operation.

6. The information processing device according to claim 5,
wherein the change in the set of the correspondence relations includes change into a different-sized set of the correspondence relations.

7. The information processing device according to claim 1,
wherein the correspondence relation is changed through communication.

8. The information processing device according to claim 1,
wherein the object information of the operation includes information for specifying an operation target or an attribute of the operation target.

9. The information processing device according to claim 8,
wherein the operation target includes an application or an apparatus.

10. The information processing device according to claim 1,
wherein the control unit further controls change in the correspondence relation on a basis of whether the information processing device is capable of communication.

11. The information processing device according to claim 1,
wherein the subject information of the operation includes information for specifying a state of a subject of the operation.

12. The information processing device according to claim 11,
wherein the state of the subject of the operation includes an action, an attitude, or a position of the subject of the operation.

13. The information processing device according to claim 1,
wherein the subject information of the operation includes information for specifying an environment around a subject of the operation.

14. The information processing device according to claim 1,
wherein the subject information of the operation includes information for specifying a subject of the operation or an attribute of the subject of the operation.

15. The information processing device according to claim 1,
wherein the object information of the operation or the subject information of the operation includes information estimated on a basis of information acquired with regard to an object or a subject of the operation.

16. The information processing device according to claim 1,
wherein the object information of the operation or the subject information of the operation includes information acquired through the speech recognition process.

17. The information processing device according to claim 1, further comprising
a notification control unit configured to control notification to a subject of the operation regarding the change in the correspondence relation.

18. The information processing device according to claim 1,
wherein the voice information related to the correspondence relation includes voice information indicating a start of the operation or voice information indicating a content of the operation.

19. An information processing method comprising, by using a processor:
acquiring voice information acquired through voice input; and
controlling change in at least a part of correspondence relations between the voice information and processes based on the voice information in a set of the correspondence relations to be used in a speech recognition process, on a basis of object information of operation using the voice input or subject information of the operation.

20. A program causing a computer to achieve:
an acquisition function of acquiring voice information acquired through voice input; and
a control function of controlling change in at least a part of correspondence relations between the voice information and processes based on the voice information in a set of the correspondence relations to be used in a speech recognition process, on a basis of object information of operation using the voice input or subject information of the operation.
